# EUROPÄISCHE PATENTSCHRIFT

(11) **EP 0 987 588 B1**
(45) Veröffentlichungstag und Bekanntmachung des Hinweises auf die Patenterteilung: **05.11.2003**
(21) Anmeldenummer: 98116162.3
(22) Anmeldetag: 27.08.1998
(51) Int. Cl.: G03B 27/46, G03B 27/62, G03D 13/00

(54) **Spulenkarussell für fotografische Bearbeitungsvorrichtung**
Spool carousel for photographic processing apparatus
Tourelle pour bobines pour un appareil de traitement photographique

(43) Veröffentlichungstag der Anmeldung: 22.03.2000
(73) Patentinhaber: GRETAG IMAGING AG, 8105 Regensdorf (CH)
(72) Erfinder: Schaub, Heinrich, 5430 Wettingen (CH)
(74) Vertreter: Schwabe - Sandmair - Marx

(56) Entgegenhaltungen:
- EP-A- 0 543 069
- GB-A- 2 128 593
- US-A- 4 138 073

## Beschreibung

Die Erfindung betrifft eine Bearbeitungsvorrichtung für vor und nach der Bearbeitung auf Spulen aufgewickeltes bahnförmiges Material gemäss dem Oberbegriff des unabhängigen Anspruchs. Insbesondere betrifft die Erfindung eine Bearbeitungsvorrichtung für fotografisches Rollenmaterial, beispielsweise etwa eine fotoelektrische Abtasteinrichtung für entwickelte fotografische Filme (Film Scanner).

In professionellen Fotolabors ist es üblich, zu ver- bzw. bearbeitende fotografische Filme zu langen Filmbahnen zusammenzuspleissen und diese Bahnen auf geeigneten Spulen zu Rollen aufzuwickeln. Das Filmmaterial wird den Bearbeitungsvorrichtungen, z.B. einem fotografischen Printer, in Rollenform zugeführt und auch nach der Bearbeitung wieder zu Rollen aufgewickelt.

Die Bearbeitung des Filmmaterials erfolgt also rollenweise (batch-weise), wobei während des Wechselns der Filmrollen bzw. -spulen auf der Eingangs- und der Ausgangsseite der Behandlungsvorrichtung der an sich kontinuierliche Bearbeitungsprozess mehr oder weniger lang unterbrochen werden muss. Um diese systembedingten Unterbrechungszeiten, die insbesondere in modernen Hochleistungsfotolabors stören, möglichst kurz zu halten, wurden schon sehr leistungsfähige Ab- und Aufwicklungseinrichtungen entwickelt, welche den auf einer Abwickelspule enthaltenen Film vollautomatisch dem Eingang der eigentlichen Behandlungsstation zuführen und den die Behandlungsstation verlassenden Film vollautomatisch auf eine leere Aufwickelspule hinführen und auf dieser aufwickeln. Eine weitere Reduktion der Unterbrechungszeiten wurde ferner auch schon durch den Einsatz von sog. Spulenkarussellen erreicht. Diese Spulenkarusselle weisen zwei oder mehrere Aufnahmeplätze für volle bzw. leere Filmspulen auf und transportieren diese Aufnahmeplätze und damit die darin enthaltenen Filmspulen sequentiell in eine Arbeitsposition und eine oder mehrere Wechselpositionen. Während sich eine Abwickelspule in Arbeitsposition befindet und das auf ihr enthaltene Filmmaterial der Bearbeitungsstation zugeführt wird, kann am in Wechselposition befindlichen Aufnahmeplatz die leere Filmspule durch eine neue, zu bearbeitendes Filmmaterial enthaltende Abwickelspule ersetzt werden. Analog kann, während sich eine Aufwickelspule in Arbeitsposition befindet und von der Bearbeitungsstation kommendes bearbeitetes Filmmaterial aufnimmt, am in Wechselposition befindlichen Aufnahmeplatz eine volle Filmspule durch eine neue leere Aufwickelspule ersetzt werden. Ein eingangs- und ausgangsseitig mit solchen Spulenkarussellen und vollautomatischen Ab- bzw. Aufwickeleinrichtungen ausgerüsteter Hochleistungsprinter ist z.B. in der US-A-5 337 118 (entsprechend EP-B-0 543 069) in allen Einzelheiten beschrieben.

Der apparative Aufwand für solche Spulenkarusselle ist relativ hoch. Ferner muss die Bedienungsperson beim genannten bekannten Hochleistungsprinter die Filmspulen in zwei separaten Arbeitsgängen an zwei räumlich auseinanderliegenden Stellen des Printers wechseln.

Durch die vorliegende Erfindung soll nun eine Bearbeitungsvorrichtung der gattungsgemässen Art dahingehend verbessert werden, dass der apparative Aufwand geringer gehalten werden kann und die Bedienung vereinfacht und erleichtert wird.

Die Lösung dieser der Erfindung zugrundeliegenden Aufgabe ergibt sich aus den im kennzeichnenden Teil des unabhängigen Anspruchs beschriebenen Merkmalen der erfindungsgemässen Bearbeitungsvorrichtung.

Gemäss dem Hauptgedanken der Erfindung ist also nur ein einziges, gemeinsames Spulenkarussell für Aufwickel- und Abwickelspulen vorgesehen. Dadurch reduziert sich einerseits der konstruktive Aufwand, und anderseits wird die Bedienung der Vorrichtung insofern erleichtert und vereinfacht, als der Spulenwechsel nur noch an einer einzigen Stelle der Vorrichtung und in einem einzigen Arbeitsgang erfolgt.

Weitere vorteilhafte und besonders zweckmässige Ausgestaltungen der erfindungsgemässen Bearbeitungsvorrichtung sind in den abhängigen Ansprüchen beschrieben.

Im folgenden wird die Erfindung anhand der Zeichnung näher erläutert. Es zeigen:
- Fig. 1: eine schematische Ansicht eines ersten Ausführungsbeispiels der erfindungsgemässen Bearbeitungsvorrichtung mit einem dreiplätzigen Spulenkarussell,
- Fig. 2: eine schematische Ansicht eines zweiten Ausführungsbeispiels der erfindungsgemässen Bearbeitungsvorrichtung mit einem vierplätzigen Spulenkarussell und
- Fig. 3-8: sechs schematische Skizzen zur Verdeutlichung diverser apparativer Details sowie der Funktionsweise der erfindungsgemässen Bearbeitungsvorrichtung.

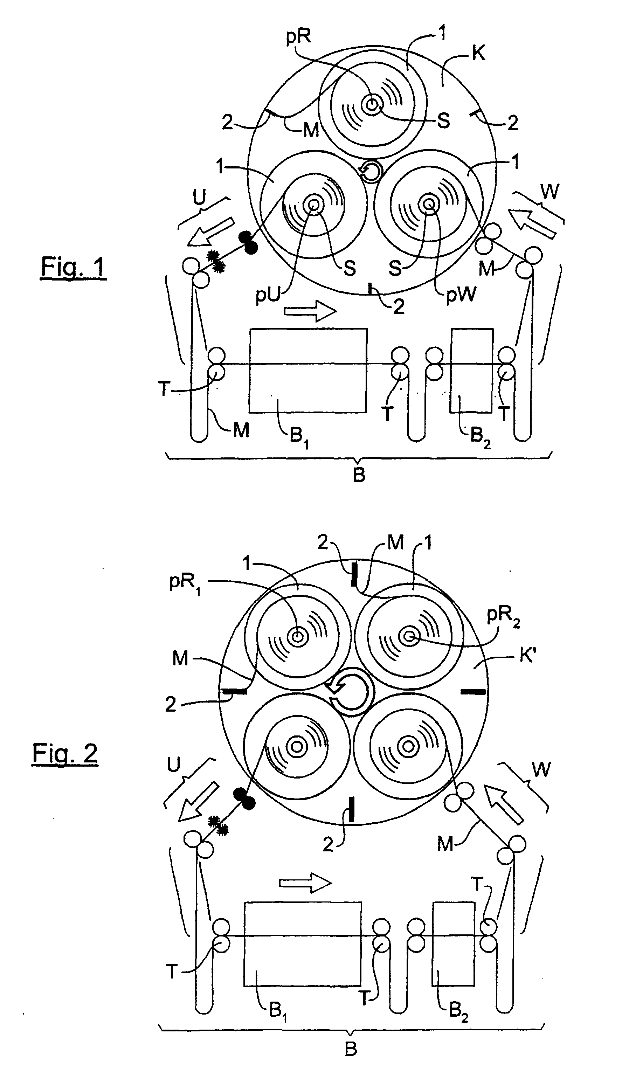

Das in Fig. 1 dargestellte erste Ausführungsbeispiel der Bearbeitungsvorrichtung umfasst im wesentlichen ein dreiplätziges Spulenkarussell K zur Aufnahme von Auf- und Abwickelspulen S für zu bearbeitendes oder schon bearbeitetes bahnförmiges Material M, eine Bearbeitungsstation B für das zu bearbeitende bahnförmige Material, eine vollautomatische Abwickeleinrichtung U und eine ebenso vollautomatische Aufwickeleinrichtung W. In der Bearbeitungsstation B befinden sich ferner Transportmittel T, um das zu bearbeitende bahnförmige Material M von der Abwickeleinrichtung U zu übernehmen, durch die Bearbeitungsstation B zu transportieren und der Aufwickeleinrichtung W zu übergeben.

Das motorisch drehbar angetriebene Spulenkarussell K ist in drei diskreten, im gegenseitigen Abstand von jeweils 120° liegenden Drehstellungen arretierbar, welche drei unterschiedliche Arbeitspositionen - eine Abwickelposition pU, eine Aufwickelposition pW und eine Wechselposition pR - definieren, in die durch Drehung des Spulenkarussells K jede der auf ihm angeordneten Spulen S nacheinander verfahren wird. Die Abwickeleinrichtung U führt das zu bearbeitende Material M jeweils von der in Abwickelposition pU befindlichen und in dieser Funktion als Abwickelspule bezeichneten Spule S zum Eingang der Bearbeitungsstation B und übergibt es deren Transportmitteln T; die Aufwickeleinrichtung W führt das von den Transportmitteln T am Ausgang der Behandlungsstation B übergebene behandelte Material jeweils der in Aufwickelposition pW befindlichen und in dieser Funktion als Aufwickelspule bezeichneten Spule S zu und wickelt es auf diese auf.

In der Wechselposition pR kann jeweils eine mit bearbeitetem Material M bewickelte Spule entnommen und durch eine neue, zu bearbeitendes Material enthaltende Spule ersetzt werden.

In der Bearbeitungsstation B wird das bahnförmige Material M in der gewünschten Weise be- bzw. verarbeitet. Beispielsweise kann die Bearbeitungsstation eine oder mehrere Bearbeitungseinheiten enthalten. Im Falle der Bearbeitung von fotografischem Filmmaterial kann die Bearbeitungsstation typischerweise als fotoelektrische Abtasteinrichtung (Scanner) und/oder als Kerbeinrichtung (Notcher) ausgebildet sein. Selbstverständlich kann die Bearbeitungsstation auch als (herkömmliche oder digitale) Belichtungseinrichtung ausgebildet sein, so dass die Bearbeitungsvorrichtung dann gesamthaft einen fotografischen Printer darstellt. Die Bearbeitung des Materials M bzw. die eigentliche Bearbeitungsstation B selbst ist nicht Gegenstand der vorliegenden Erfindung und bedarf deshalb keiner näheren Erläuterung. Auch ist die erfindungsgemässe Bearbeitungsvorrichtung nicht auf Anwendungen im fotografischen Bereich beschränkt, sondern lässt sich selbstverständlich auch für die Bearbeitung von Rollenmaterial beliebiger anderer Art einsetzen.

Das in Fig. 2 dargestellte Ausführungsbeispiel der erfindungsgemässen Bearbeitungsvorrichtung unterscheidet sich vom ersten Ausführungsbeispiel nur dadurch, dass das Spulenkarussell K' mit vier anstatt mit drei Aufnahmeplätzen für Spulen S versehen ist und entsprechend vier diskrete, gleichabständige Drehstellungen aufweist, welche eine Abwickelposition pU, eine Aufwickelposition pW und jetzt zwei benachbarte Wechselpositionen pR1 und pR2 definieren. Aufgrund der zusätzlich zur Verfügung stehenden zweiten Wechselposition ist eine flexiblere Bedienung beim Spulenwechsel möglich.

Selbstverständlich könnte die Bearbeitungsvorrichtung für spezielle Anwendungsfälle auch mit einem Spulenkarussell ausgestattet sein, das mehr als vier Spulenaufnahmeplätze aufweist. Im allgemeinen bringt aber eine weitere Erhöhung der Anzahl der Spulenaufnahmeplätze keine substantiellen zusätzlichen Vorteile.

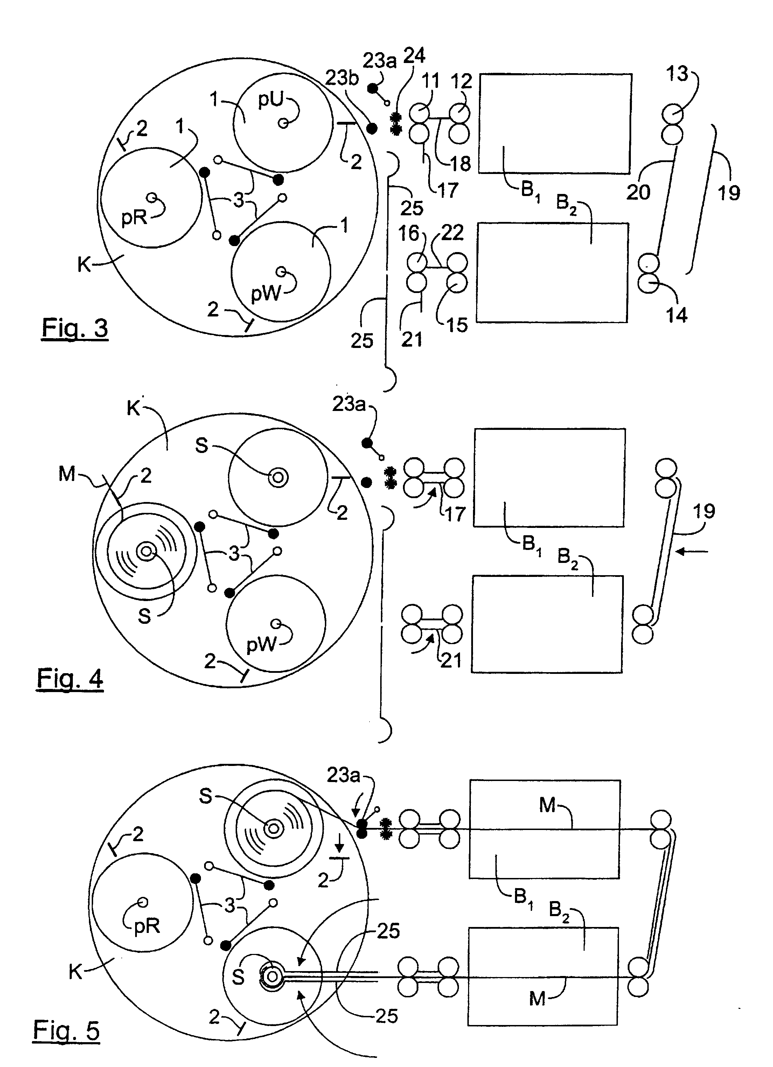

Im folgenden wird anhand der Figuren 3-8 die Funktionsweise der Bearbeitungsvorrichtung am Beispiel eines dreiplätzigen Spulenkarussells näher erläutert. Für das Ausführungsbeispiel mit dem vierplätzigen Spulenkarussell gelten die Ausführungen in analoger Weise.

Die Fig. 3 zeigt die Vorrichtung im Grundzustand, in welchem das Spulenkarussell K noch keine Spulen enthält. Die Wechselposition, die Abwickelposition und die Aufwickelposition der Spulen sind durch die mit pR, pU und pW bezeichneten Punkte angedeutet.

Man erkennt auf dem Spulenkarussell drei Spulenaufnahmeplätze 1, drei je einem Spulenaufnahmeplatz zugeordnete elektrisch betätigbare Klemmvorrichtungen 2 für die Anfänge des auf einer Abwickelspule befindlichen Rollenmaterials und drei jedem Spulenaufnahmeplatz zugeordnete, ebenfalls elektrisch betätigbare Festhaltevorrichtungen 3 für die oberste Wickellage des auf einer Aufwickelspule befindlichen Rollenmaterials. Aufjedem Spulenaufnahmeplatz 1 kann, z.B. wie in der eingangs genannten US-A-5 337 118 ausführlich beschrieben, eine leere oder eine mit Rollenmaterial bewickelte Spule S lösbar befestigt werden. Jedem Spulenaufnahmeplatz 1 ist ferner ein nicht dargestellter Antriebsmotor für die im Spulenaufnahmeplatz angebrachte Spule zugeordnet. Die Klemmvorrichtungen 2 bestehen z.B. aus zwei federnd gegen einander drückenden Backen, die elektrisch geöffnet werden können. Die Festhaltevorrichtungen 3 bestehen, wie z.B. in der eingangs genannten US-A-5 337 118 ausführlich beschrieben, aus einem an seinem freien Ende mit einer Andruckrolle versehenen elektrisch zu- und wegstellbaren Schwenkhebel. Die Steuerung der Antriebsmotoren für die Spulen S, der Klemmvorrichtungen 2, der Festhaltevorrichtungen 3 sowie des (nicht dargestellten) Antriebsmotors für das Spulenkarussell selbst erfolgt in konventioneller Weise mittels einer entsprechend programmierten digitalen Steuerung

Die Bearbeitungsstation umfasst hier beispielsweise eine Abtasteinrichtung B1 und eine Kerbeeinrichtung B2. Die Transportmittel für das Material durch die Bearbeitungsstation sind durch elektrisch angetriebene Transportrollenpaare 11-16 sowie durch feststehende und elektrisch bewegliche Leitklappen 17-22 angedeutet. Der Antrieb und die entsprechende Steuerung der Transportrollenpaare und der Leitklappen erfolgt in konventioneller Weise mittels Schrittmotoren und Dreh- bzw. Hubmagneten und einer entsprechend programmierten digitalen Steuerung. Die beiden eingangsseitigen Transportrollenpaare 11 und 12 zusammen mit den Leitklappen 17 und 18 einerseits und die beiden ausgangsseitigen Transportrollenpaare 15 und 16 zusammen mit den Leitklappen 21 und 22 anderseits bilden in an sich bekannter Weise ein eingangsseitiges und ein ausgangsseitiges Schlaufenmodul, das die Bearbeitungsstation vom Spulenkarussell mechanisch entkoppelt. In analoger Weise bilden die Transportrollenpaare 13 und 14 zusammen mit den Leitklappen 19 und 20 ein weiteres Schlaufenmodul, welches die beiden Bearbeitungseinheiten B1 und B2 innerhalb der Bearbeitungsstation mechanisch entkoppelt. Schlaufenmodule dieser Art sind allgemein bekannt und z.B. in der eingangs genannten US-A-5 337 118 (entsprechend EP-B-0 543 069) ausführlich beschrieben.

Die das Spulenkarussell K mit dem Eingang der Behandlungsstation verbindende Abwicklungseinrichtung besteht im wesentlichen aus einem motorisch angetriebenen Rollenpaar 23a/23b und einem als rotierendes Bürstenpaar zur Reinigung des Films ausgebildeten Rollenpaar 24, wobei die Rolle 23a beweglich (schwenkbar) angeordnet ist, so dass sie in bzw. ausser Eingriff mit der Rolle 23b gebracht werden kann. Der Antrieb und die Verstellung der Rollen erfolgt konventionell über nicht gezeigte Antriebsmotoren in Verbindung mit einer entsprechend programmierten digitalen Steuerung.

Die das Spulenkarussell K mit dem Ausgang der Bearbeitungsstation verbindende Aufwickeleinrichtung besteht im wesentlichen aus einem Paar elektrisch angetriebener, sich zangenartig öffnenden und schliessenden Führungslöffel 25, die in geschlossenem Zustand zwischen sich einen Führungskanal bilden, welcher das bearbeitete Rollenmaterial an den Wickelkern einer in Aufwickelposition befindlichen leeren Aufwickelspule heranführt, so dass es sich auf dem Wickelkern fängt und aufgewickelt wird. Der Antrieb und die Verstellung der Führungslöffel 25 erfolgt konventionell über nicht gezeigte Antriebsmotoren bzw. -magneten in Verbindung mit einer entsprechend programmierten digitalen Steuerung. Die genaue Ausbildung und Funktionsweise der Aufwickeleinrichtung ist ebenfalls z.B. in der schon erwähnten US-A-5 337 118 im Detail beschrieben und bedarf deshalb keiner weiteren Erläuterung.

In der in Fig. 3 gezeigten Grund- oder Ausgangsstellung der Vorrichtung wird im gerade in der Wechselposition pR befindlichen Spulenaufnahmeplatz eine leere Spule S befestigt und dann das Spulenkarussel um einen Schritt in die in Fig. 4 gezeigte Drehstellung weitergedreht, so dass sich die leere Spule in Abwickelposition pU befindet. Die beweglichen Leitklappen 17, 19 und 21 werden auf ihre jeweils zugeordneten feststehenden Leitklappen 18, 20 und 22 zu bewegt, um paarweise zwischen sich Führungskanäle zu bilden. Die beiden Rollen 23a und 23b sind von einander entfernt.

Nun wird in der Wechselposition pR eine (volle) Spule S mit zu bearbeitendem Material M angebracht und der Anfang der Materialbahn an der zugeordneten Klemmvorrichtung 2 befestigt, so dass ein kleines Materialbahnstück aus der Klemmvorrichtung herausragt. Dann wird das Spulenkarussel um einen Schritt in die in Fig. 5 gezeigte Drehstellung weitergedreht, bei der sich die volle Spule S in Abwickelposition pU und die leere Spule S in Aufwickelposition pW befinden. Das aus der Klemmvorrichtung 2 herausragende Anfangsstück des Bahnmaterials kommt auf der Rolle 23b zu liegen. Jetzt wird die Rolle 23a auf die Rolle 23b zugestellt, so dass das Rollenpaar 23a/23b den Materialbahnanfang erfasst, und gleichzeitig wird die Klemmvorrichtung 2 gelöst. Ferner schliessen sich auch die Führungslöffel 25 um die in Aufwickelposition pW befindliche leere Spule S Nun zieht die aus den beiden Rollenpaaren 23a/23b und 24 bestehende Abwickelvorrichtung das Rollenmaterial von der Abwickelspule S ab und führt es den durch die Transportrollenpaare 11-16 und die Leitplatten 17-22 gebildeten Transportmitteln zu. Diese transportieren das Material durch die Bearbeitungsstation und übergeben es ausgangsseitig der durch die Führungslöffel 25 gebildeten Aufwikkeleinrichtung, die das Material ihrerseits auf die in Aufwickelposition pW befindliche Aufwickelspule S leitet.

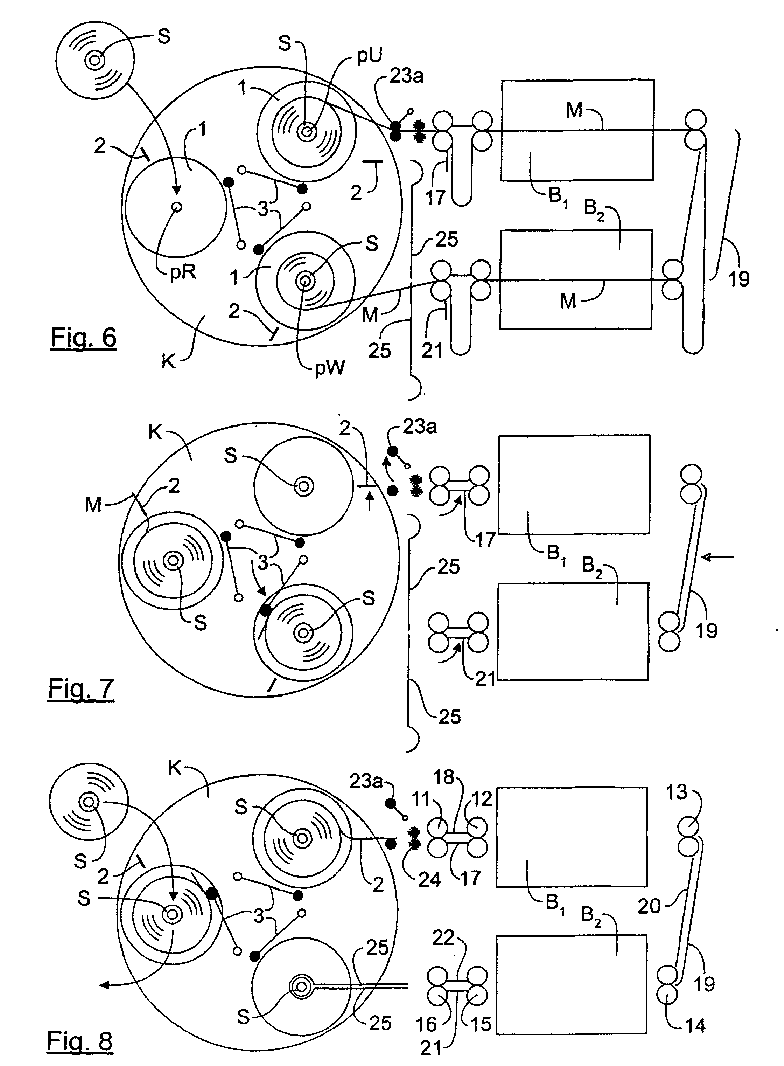

Gleichzeitig oder im unmittelbaren Anschluss daran werden die Führungslöffel 25 wieder geöffnet und die Leitklappen 17, 19 und 21 wieder von ihren feststehenden Leitklappen 18, 20 und 22 wegbewegt und in der Materialbahn in an sich üblicher Weise drei Entkopplungsschlaufen gebildet (Fig. 6).

Während nun das Material M durch die Bearbeitungsstation läuft, wird der in Wechselposition pR befindliche Spulenaufnahmeplatz 1 mit einer neuen Spule mit zu bearbeitendem Material beladen.

Wenn die Abwickelspule in der Abwickelposition pU leer ist und das gesamte Material die Bearbeitungsstation durchlaufen hat und auf der Aufwickelspule aufgewickelt ist (erkennbar durch geeignete, nicht dargestellte Materialbahn-Fühler), wird die Festhaltevorrichtung 3 in der Aufwickelposition pW aktiviert, so dass sich das aufgewickelte Material nicht von selbst lösen kann. Gleichzeitig werden die Leitklappen 17, 19 und 21 sowie die Rolle 23a wieder in ihre Grundstellungen zurückgeführt (Fig. 7).

Nun wird das Spulenkarussel K um einen weiteren Schritt weitergedreht, so dass die volle Aufwickelspule in die Wechselposition pR, die leere Abwickelspule in die Aufwickelposition pW und die neues zu bearbeitendes Material enthaltende Spule in die Abwickelposition pU gelangen (Fig. 8). Die Situation entspricht nun derjenigen gemäss Fig. 5, und es passiert auch wieder genau das gleiche wie im Zusammenhang mit Fig. 5 beschrieben. Der einzige Unterschied besteht darin, dass die Wechselposition pR jetzt nicht mehr leer ist, sondern eine volle Spule mit bereits bearbeitetem Material enthält. Es beginnt nun ein neuer Arbeitszyklus entsprechend Figuren 5-8, wobei die Spule mit dem bearbeiteten Material vom Spulenkarussell entnommen und durch eine neue Spule mit zu bearbeitendem Material ersetzt wird.

Wie aus den vorstehenden Ausführungen hervorgeht, braucht eine leere Spule nur ganz am Anfang beim allerersten Arbeitszyklus geladen zu werden, bei den folgenden Arbeitszyklen übernimmt jeweils die leer gewordene Abwickelspule die Rolle der Aufwickelspule, und die Bedienung der Vorrichtung beschränkt sich auf den Austausch einer mit bearbeitetem Material vollen Spule durch eine neue Spule mit unbearbeitetem Material.

## Patentansprüche

1. Bearbeitungsvorrichtung für vor und nach der Bearbeitung auf Spulen aufgewikkeltes bahnförmiges Material (M), insbesondere entwickeltes fotografisches Rollenmaterial, mit einer Bearbeitungsstation (B) für das Material und entsprechenden Transportmitteln (T), um das Material durch die Bearbeitungsstation zu transportieren, mit einer Abwickeleinrichtung (U) zum automatischen Zuführen des auf einer in einer Abwickelposition (pU) befindlichen Abwickelspule (S) befindlichen zu bearbeitenden Materials von der Abwickelspule in die Bearbeitungsstation, und mit einer Aufwikkeleinrichtung (W) zum automatischen Zuführen und Aufwickeln des die Bearbeitungsstation verlassenden bearbeiteten Materials auf eine in einer Aufwickelposition (pW) befindliche Aufwickelspule (S), **dadurch gekennzeichnet, dass** ein zur Aufnahme von mindestens drei Spulen (S) ausgebildetes gemeinsames Spulenkarussell. (K) für Abwickelspulen (S) und Aufwickelspulen (S) vorgesehen ist, welches die auf ihm abnehmbar angeordneten Spulen (S) zyklisch schrittweise in die Abwickelposition (pU), in die Aufwickelposition (pW) und in mindestens eine Wechselposition (pR) transportiert, so dass eine nach dem Abwickeln des zu bearbeitenden Materials (M) leere Abwickelspule (S) nach ihrem Weitertransport in die Aufwickelposition (pW) die Rolle einer Aufwickelspule (S) übernimmt und in der mindestens einen Wechselposition (pR) eine bearbeitetes Material enthaltende Aufwickelspule (S) vom Spulenkarussell (K) entnommen und eine neue, zu bearbeitendes Material enthaltende Abwickelspule (S) auf das Spulenkarussell (K) aufgegeben werden kann.

2. Vorrichtung nach Anspruch 1, **dadurch gekennzeichnet, dass** die Bearbeitungsstation (B) eine fotoelektrische Filmabtasteinrichtung (Scanner) ist oder enthält.

3. Vorrichtung nach Anspruch 1 oder 2, **dadurch gekennzeichnet, dass** die Bearbeitungsstation (B) eine Filmkerbeinrichtung (Notcher) ist oder enthält.

4. Vorrichtung nach einem der vorangehenden Ansprüche, **dadurch gekennzeichnet, dass** das Spulenkarussell (K) mit elektrischen Antriebsmitteln für die auf ihm befestigten Spulen (S) ausgestattet ist.

5. Vorrichtung nach einem der vorangehenden Ansprüche, **dadurch gekennzeichnet, dass** das Spulenkarussell (K) mit elektrisch lösbaren Klemmvorrichtungen (2) für das auf den Spulen (S) befindliche zu behandelnde Material (M) versehen ist.

6. Vorrichtung nach einem der vorangehenden Ansprüche, **dadurch gekennzeichnet, dass** das Spulenkarussell (K) mit elektrisch betätigbaren Festhaltevorrichtungen (3) für die oberste Wickellage von auf den Spulen (S) aufgewickeltem behandelten Material (M) versehen ist.

## Claims

1. Processing device for winding web-shaped material (M) onto spools before and after processing, in particular wound photographic roll material, with a processing station (B) for the material and appropriate transport means (T) for feeding the material through the processing station, having an unwinding mechanism (U) for automatically feeding the material on an unwinding spool (S), located in an unwinding position (pU), from the unwinding spool into the processing station, and having a winding mechanism (W) for automatically feeding and winding the processed material leaving the processing station onto a winding spool (S), located in a winding position (pW), **characterised in that** a common spool carousel (K) designed to hold at least three spools (S) simultaneously is provided for unwinding spools (S) and winding spools (S), which transports the spools (S) removably arranged thereon cyclically in steps into the unwinding position (pU), into the winding position (pW) and into at least one replacement position (pR) so that an empty unwinding spool (S), from which the material (M) to be processed has been unwound, having been transported onwards into the winding position (pW), picks up the roll of a winding spool (S), and, in the at least one replacement position (pR) a winding spool (S) containing a processed material can be taken off the spool carousel (K) and a new unwinding spool (S) containing material to be processed can be placed on the spool carousel (K).

2. Device as claimed in claim 1, **characterised in that** the processing station (B) is or contains a photoelectric film scanner.

3. Device as claimed in claim 1 or 2, **characterised in that** the processing station (B) is or contains a film notcher.

4. Device as claimed in one of the preceding claims, **characterised in that** the spool carousel (K) is fitted with electric drive means for the spools (S) attached to it.

5. Device as claimed in one of the preceding claims, **characterised in that** the spool carousel (K) is provided with electrical, detachable clamping devices (2) for the material (M) to be processed disposed on the spools (S).

6. Device as claimed in one of the preceding claims, **characterised in that** the spool carousel (K) is provided with electrically operated retaining mechanisms (3) for the uppermost winding layer of processed material (M) wound onto the spools (S).

## Revendications

1. Dispositif de traitement pour un matériau (M) en forme de bande enroulé sur des bobines avant et après le traitement, en particulier matériau photographique en rouleau développé, comportant un poste de traitement (B) du matériau et des moyens de transport (P) correspondants pour transporter le matériau à travers le poste de traitement, comportant un dispositif de dévidage (U) pour l'amenée automatique du matériau à traiter se trouvant sur une bobine de dévidage (S) se trouvant dans une position de dévidage (pU), de la bobine de dévidage au poste de traitement, et comportant un dispositif d'enroulement (W) pour l'amenée automatique et l'enroulement du matériau traité sortant du poste de traitement sur une bobine d'enroulement (S) se trouvant dans une position d'enroulement (pW), **caractérisé en ce qu'**il est prévu un carrousel à bobines (K) commun pour les bobines de dévidage (S) et les bobines d'enroulement (S) conçu pour recevoir au moins trois bobines (S), lequel carrousel transporte cycliquement, pas à pas, les bobines (S) disposées sur celui-ci de manière qu'elles puissent être prélevées, dans la position de dévidage (pU), dans la position d'enroulement (pW) et dans au moins une position d'échange (pR), de manière qu'une bobine d'enroulement (S) vide après dévidage du matériau (M) à traiter, reprenne, après son transport dans la position d'enroulement (pW), le rouleau d'une bobine d'enroulement (S) et que dans au moins une position d'échange (pR), une bobine d'enroulement (S) contenant un matériau traité puisse être prélevée du carrousel à bobines (K) et une nouvelle bobine de dévidage (S) contenant un matériau à traiter puisse être chargée sur le carrousel à bobines (K).

2. Dispositif selon la revendication 1, **caractérisé en ce que** le poste de traitement (B) est ou contient un dispositif photoélectrique d'exploration d'un film (scanner).

3. Dispositif selon la revendication 1 ou 2, **caractérisé en ce que** le poste de traitement (B) est ou contient un dispositif d'encochage de film (notcher).

4. Dispositif selon l'une des revendications précédentes, **caractérisé en ce que** le carrousel à bobines (K) est équipé de moyens d'entraînement électriques pour les bobines (S) fixées sur celui-ci.

5. Dispositif selon l'une des revendications précédentes, **caractérisé en ce que** le carrousel à bobines (K) est pourvu de dispositifs de serrage (2) pouvant être déverrouillés de manière électrique pour le matériau (M) à traiter se trouvant sur les bobines (S).

6. Dispositif selon l'une des revendications précédentes, **caractérisé en ce que** le carrousel à bobines (K) est pourvu de dispositifs de fixation (3) pouvant être actionnés électriquement pour la couche d'enroulement supérieure du matériau (M) traité enroulé sur les bobines (S).
